# EUROPÄISCHE PATENTANMELDUNG

(11) **EP 0 536 487 A1**
(43) Veröffentlichungstag der Anmeldung: **14.04.1993**
(21) Anmeldenummer: 92112546.4
(22) Anmeldetag: 22.07.1992
(51) Int. Cl.: H04N 1/00

(54) **Verfahren zur Datenkonvertierung**

(30) Priorität: 30.08.1991 DE 4128940
(71) Anmelder: SIEMENS AKTIENGESELLSCHAFT, D-80333 München (DE)
(72) Erfinder: Siegmund, Wolfgang, Dr. Dipl.-Phys., W-8000 München 60 (DE); Mayer, Paul, Dipl. Math., W-8000 München 2 (DE); Eckler, Lothar, Dipl.-Ing., W-8034 Germering (DE); Fellerer, Josef, Dipl.-Phys., W-8000 München 21 (DE)

(57) **Zusammenfassung**

Verfahren zur Datenkonvertierung, wobei druckaufbereitete digitale Daten (DR) eines mit einer Text- und/oder Graphik-Software am Bildschirm einer Datenverarbeitungsanlage (D) erstellten Dokumentes oder Schriftgutes in faxspezifische Übertragungsdaten (FDAT) konvertiert werden. Durch Datenverarbeitungsprozeduren (INT, COM) wird durch eine Software-Emulation eines Druckertpys ein binäres Speicherabbild der druckaufbereiteten digitalen Daten (DR) des Dokumentes erzeugt und in einem Bildelementespeicher (BS) zwischengespeichert. Das druckspezifische Binärmuster des Speicherabbildes wird in ein Codeanpassungs-Prozeduren ausführendes Programmodul (COD) in ein faxspezifisches Binärmuster transformiert und codiert.

## Beschreibung

Die Erfindung betrifft ein Verfahren, das digitale Daten eines mit einer Text- und/oder Graphik- Software an einem Bildschirm oder einem Display einer Datenverarbeitungsanlage, insbesondere ein Personal-Computer, erstellten Dokumentes oder Schriftgutes in faxspezifische Übertragungsdaten konvertiert.

Bisher war es üblich, zu einer Faxübertragung ein am Bildschirm der Datenverarbeitungsanlage erstelltes Dokument an einem an einer Datenverarbeitungsanlage angeschlossenen Drucker ausdrucken zu lassen und das auf Papier gedruckte Dokument dann durch eine optoelektronische Einheit eines Faxgerätes abzutasten. Die Abtastdaten der optoelektronischen Einheit werden dann faxspezifisch codiert und übertragen.

Nachteile dieser Art der Faxübertragung sind, daß durch Ausdrucken und nachfolgendes optoelektronisches Abtasten ein Qualitätsverlust des Druckbildes eintritt und daß diese Verfahrensweise Zeit und Papier kostet. Um den Aufwand eines Zwischenausdruckes eines am Bildschirm erstellten Dokumentes und die zeitraubende sowie qualitätsmindernde optische Abtastung durch die optoelektronischen Einheiten des Faxgerätes zu umgehen, kann in der Datenverarbeitungsanlage eine "Faxkarte" eingebaut werden. Dies hat jedoch den Nachteil, daß ein freier Kartensteckplatz in der Datenverarbeitungsanlage belegt und andere Ausbaumöglichkeiten oder eine andersartige Benutzeroberflächenerweiterung der Datenverarbeitungsanlage blockiert wird. Ein weiterer Nachteil der "Faxkarten" ist, daß diese immer anbieterspezifisch eine eingeschränkte Anzahl von Softwareprodukten zur Text- und/oder Graphikerstellung in der Datenverarbeitungsanlage zur Faxübertragung unterstützen (Faxe aus dem Computer, Funkschau 2/91, Seite 39-41).

Die der Erfindung zugrundeliegende Aufgabe besteht darin, ein weiteres Verfahren anzugeben, wie ein am Bildschirm einer Datenverarbeitungsanlage erstelltes Dokument in für Faxübertragung geeignete Daten umgesetzt werden kann.

Die Lösung dieser Aufgabe ergibt sich aus Patentanspruch 1.

Die Erfindung weist neben dem wirtschaftlichen Vorteil einer Einsparung eines Faxgerätes oder einer "Faxkarte" noch die weiteren Vorteile auf:
- daß ein durch eine beliebige Text- und/oder Graphiksoftware in einer Datenverarbeitungsanlage erzeugtes und auf einem Bildschirm dargestelltes Dokument in ein faxsimilespezifisches Dokument umgesetzt sowie übertragen wird, wobei sämtliche für den Faxsbetrieb kompatiblen Telekommunikationsendgeräte diese von der Datenverarbeitungsanlage ausgesendeten Faxdokumente empfangen, auswerten und ausdrucken können,
- daß das ursprüngliche "Layout" des am Bildschirm dargestellten Druckbildes des Dokumentes z.B. in Schriftart oder Schriftgrad bei der Umsetzung in faxspezifische Übertragungsdaten erhalten bleibt, - und daß trotz einer Erweiterung der Benutzeroberfläche der Datenverarbeitungsanlage der nicht belegte Kartensteckplatz in der Datenverarbeitungsanlage für andere Anwendungen frei bleibt.

Weitere Vorteile der Erfindung ergeben sich aus den angegebenen Merkmalen der auf den Patentanspruch 1 rückbezogenen Unteransprüche.

Weitere Besonderheiten der Erfindung werden aus der nachfolgenden näheren Erläuterung eines Ausführungsbeispiels anhand der Zeichnungsfiguren ersichtlich.

Es zeigen:
- FIG 1: ein Blockschaltbild,
- FIG 2: eine Detaildarstellung,
- FIG 3: ein Ablaufdiagramm.

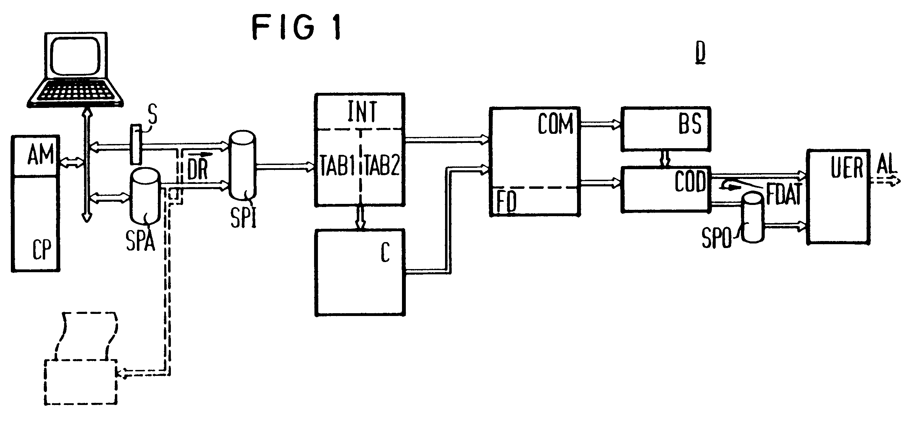

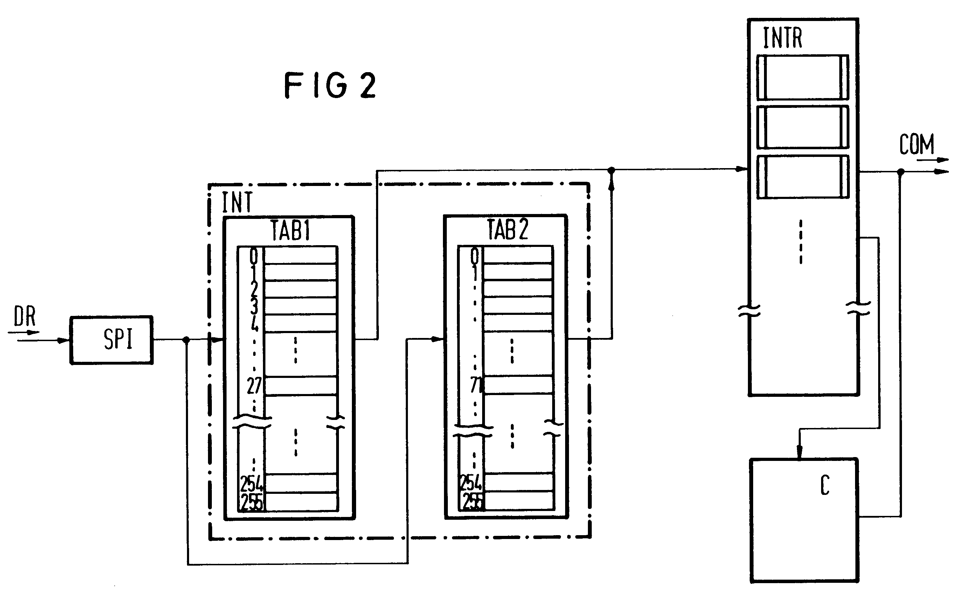

Figur 1 zeigt schematisch in einem zum Verständnis der Erfindung erforderlichen Umfang eine Anordnung von Modulen (z.B. INT, C, COM, BS, COD, UER) zur Durchführung eines Verfahrens zur Datenkonvertierung (DR, FDAT). Bei diesem Verfahren werden die in einer Datenverarbeitungsanlage D für einen Druckertyp aufbereiteten Daten DR in faxspezifische Daten FDAT codiert. Die druckaufbereiteten Daten DR werden entweder direkt von einem Ausgabemodul AM der Datenverarbeitungsanlage D über eine Datenschnittstelle S oder aus einem Arbeitsspeicher SPA einer Datenverarbeitungsanlage D in einen Eingangszwischenspeicher SPI eingelesen. Die druckaufbereiteten Daten DR können sich aus verschiedenen Codes wie z.B. Code für druckbare Zeichen, insbesondere ASCII-Zeichen, Graphikinformation oder druckerspezifische Steuerdaten zusammensetzen. Der Interpreter INT liest die im Eingangszwischenspeicher SPI gespeicherten druckaufbereiteten Daten DR aus. Datenverarbeitungsprozeduren, die durch den Interpreter INT ausgeführt werden, trennen die in den druckaufbereiteten Daten DR enthaltenen codierten druckbaren Zeichen, Graphikinformation sowie druckerspezifische Steuercodes. Die Codes für druckbare Zeichen und Graphikinformationen werden direkt an einem Composer COM weiter geleitet. Die in den druckaufbereiteten Daten DR enthaltenen Steuercodes werden im Interpreter INT ausgewertet und steuern die Arbeitsweise des Composers, z.B. Zeichensatz, Zeilenabstand, Hervorhebung von Zeichen. Der Interpreter INT kann z.B. Steuercodes über Interpretertabellen INT auswerten und das Ergebnis als Steuervariablen in einem Steuervariablenmodul C ablegen. Im Prinzip arbeitet der Interpreter INT mit zwei Interpretertabellen TAB. Die erste Interpretertabelle heißt Interpreter-Haupttabelle TAB1 die zweite Escape-Sequenz-Tabelle TAB2. Die erste und zweite Tabelle enthalten jeweils Adressen von Prozeduren INTR, welche die Steuervariablen für den Composer COM bestimmen. Nähere Einzelheiten werden weiter unten anhand von FIG 2 erläutert. Die Steuervariablen können dabei Zeichensätze wie z.B. Fettdruck, Breitschrift sowie Variablen für eine Schriftgröße sein. Der Composer COM bildet aus dem Code der druckbaren Zeichen und/ oder der Graphikinformation sowie aus den vom Interpreter gelieferten Steuerinformation ein aus 0 oder 1 bestehendes Binärmuster im Bildelementespeicher BS. Dabei entspricht jedes Binärzeichen (0 oder 1) einem Bildpunkt des auf Papier gedruckten Orginaldokumentes. Binärmuster von codierten druckbaren Zeichen werden z. B. aus vorher in Font-Daten abgelegten Binärmustern übernommen. Graphikinformationen werden mit der vom Interpreter gelieferten Steuerinformation aufbereitet und in das Speicherabbild des Orginaldokumentes übernommen. Das binäre Speicherabbild des Dokumentes oder Schriftgutes wird im Bildelementespeicher BS zwischengespeichert. Der Coder COD hat die Aufgabe, die horizontale und vertikale Auflösung des im Bildspeicher BS abgespeicherten binären Druckbildes des Dokumentes an eine faxspezifische horizontale und vertikale Auflösung anzupassen. Desweiteren werden durch den Coder COM die abgespeicherten Binärmuster des Dokumentes in einen für Fax geeigneten Übertragungscode codiert. So z.B. können die binär abgespeicherten Druckbilder in den Bildelementespeicher BS mit dem modifizierten "Huffman-Code" oder "Read-Code" codiert werden. Der Coder COD fügt den faxspezifisch codierten Dokumentdaten FDAT noch die für die korrespondierenden Telekommunikationsendgeräte nötigen Steuerinformationen wie z.B. Art des Codierverfahrens, Auflösung, Seitenzahl usw. bei. Die der faxspezifischen Übertragungsart angepaßten und codierten digitalen Dokumentdaten FDAT werden entweder direkt an eine Übertragungseinrichtung UER weitergeleitet oder in einem Ausgangszwischenspeicher SPO zwischengespeichert. Mit der am Übertrager UER angedeuteten Verbindungsleitung AL können faxspezifisch codierte Daten beispielsweise über das öffentliche Vermittlungsnetz oder direkt zu anderen Telekommunikationsteilnehmern weitergeleitet werden.

FIG 2 zeigt eines der Module von FIG 1 im Detail. Anhand der Beispiele
a) Datenkonvertierung eines druckbaren Zeichens,
b) Einschalten einer "Fettschrift" für nachfolgende druckbare Zeichen und
c) Datenkonvertierung einer Graphik-Steuersequenz, soll die Datenkonvertierungsprozedur näher erläutert werden.

Zu a). Datenkonvertierung eines druckbaren Zeichens. Ein druckbares Zeichen, z.B. ein Buchstabe "A" soll in einem faxspezifischen Code konvertiert werden. Eine rechnerinterne Darstellung des Zeichens "A" ist in dem ausgewählten Beispiel 41 hex im Hexerdezimalsystem oder 65 dez im Dezimalsystem. Das druckbare Zeichen "A" wird aus dem Eingangszwischenspeicher SPI gelesen. Die ASCII-Darstellung des Zeichens "A" (65 dez) adressiert die Zeile Nr. 65 in der Interpreter-Haupttabelle TAB1. Der Eintrag in der Zeile 65 ist wiederum eine Adresse einer Programmroutine, die anschließend ausgeführt wird. In diesem Beispiel ist es die Programmroutine für ein druckbares Zeichen. Innerhalb dieser Programmroutine wird das Zeichen "A" an eine Composer-Routine übergeben. Diese entnimmt aus einer Zeichensatz-Tabelle FD ein dem Zeichen "A" entsprechendes Bitmuster und setzt es in den Bildelementespeicher BS an die aktuelle Position unter Berücksichtigung der im Steuervariablenmodul C vermerkten Attribute wie z.B. "Fettdruck" oder "Unterstreichen" in dem Steuervariablenmodul C. Wenn die Speicherkapazität des Bildelementespeichers BS erreicht ist, wird dessen Inhalt über den Coder COD in einen faxspezifischen Code FDAT umgesetzt und der Bildelementespeicher BS wird neu initialisiert.

Zu b). Einschalten einer "Fettschrift" für nachfolgende druckbare Zeichen.
Eine im Eingangszwischenspeicher BS zwischengespeicherte Steuersequenz hat dabei die hexadezimale Darstellung 1b hex bzw. 27 dez und 47 hex bzw. 71 dez. Aus dem Eingangszwischenspeicher BS wird das erste Zeichen der Steuersequenz 27 dez gelesen. Dieses adressiert den Eintrag Nr. 27 in der Interpreter-Haupttabelle TAB1. Dieser Eintrag verweist auf die Programmroutine zur Behandlung von Steuersequenzen, welche ausgeführt wird. Die Programmroutine liest das nächste Byte aus dem Eingangszwischenspeicher SPI (in diesem Fall z.B. 71 dez) und adressiert damit den Eintrag Nr. 71 in der Escape-Sequenz-Tabelle TAB 2. Dieser Eintrag verweist auf eine Programmroutine, die in dem Steuervariablenmodul C das Attribut "Fettdruck" vermerkt. Dieses Attribut wird bei der faxspezifischen Umsetzung nachfolgender druckbarer Zeichen benützt (siehe Beispiel a).

Zu c) Datenkonvertierung einer Graphiksteuersequenz.
Aus dem Eingangszwischenspeicher SPI wird das erste Zeichen der Steuersequenz 27 dez gelesen, welches den Eintrag Nr. 27 in der Interpreter-Haupttabelle TAB1 adressiert. Dieser Eintrag verweist auf eine Programmroutine zur Behandlung von Steuersequenzen. Die Programmroutine liest das nächste Byte aus dem Eingangszwischenspeicher SPI (z. B. 76 dez) und adressiert damit den Eintrag Nr. 76 in der Escape-Sequenz-Tabelle TAB2. Dieser Eintrag verweist auf eine Programmroutine, welche z. B. eine Graphik mit 120 dpi (Punkte pro Zoll) abarbeitet. Diese Programmroutine liest die nächsten zwei Bytes aus dem Eingangszwischenspeicher SPI und interpretiert diese als die Anzahl der darzustellenden Graphikdatenbytes. Außerdem wird in das steuervariable Modul C die Graphikauflösung 120 dpi eingetragen. Nachfolgend werden die umzusetzenden Graphikdatenbytes aus dem Eingangszwischenspeicher SPI gelesen und unter Berücksichtigung der im Steuervariablenmodul C eingestellten Werte als Bildelementemuster in den Bildelementespeicher BS an die aktuelle Position übertragen. Die Umsetzung in den faxspezifischen Code erfolgt wie unter Beispiel a) beschrieben.

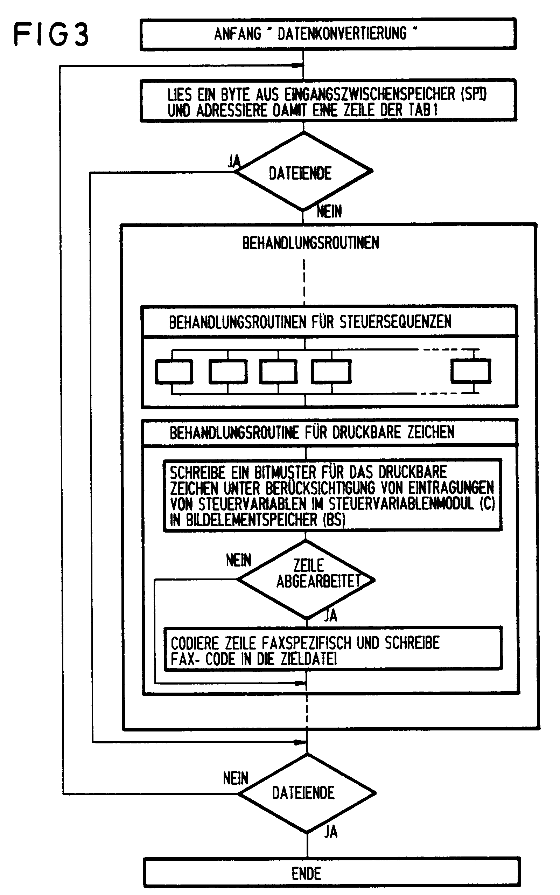

FIG 3 zeigt ein Ablaufdiagramm der Interpreter-Hauptroutine mit einer Vielzahl von über die Interpreter-Haupttabelle TAB1 adressierbaren Behandlungsroutinen (Programmroutinen). Zwei davon, eine Behandlungsroutine für Steuersequenzen und eine für druckbare Zeichen sind zur Verdeutlichung des Ablaufdiagramms näher ausgeführt. Ein aus dem Eingangszwischenspeicher SPI (siehe z.B. FIG 1) ausgelesenes Byte dient als Index in der Interpreter-Haupttabelle TAB1, welche die jeweiligen Behandlungsroutinen adressiert, wobei eine Behandlungsroutine für eine Steuersequenz oder für ein druckbares Zeichen aufgerufen wird (siehe hierzu FIG 1, 2 sowie dazugehörige Beschreibung).

## Patentansprüche

1. Verfahren zur Datenkonvertierung, wobei druckaufbereitete digitale Daten (DR) eines mit einer Text- und/oder Graphik-Software an einem Bildschirm einer Datenverarbeitungsanlage (D) erstellten Dokumentes oder Schriftgutes in faxspezifische Übertragungsdaten (FDAT) konvertiert werden, **dadurch gekennzeichnet**, daß die mit Steuerzeichen versehenen Text- und/oder Graphikdaten (DR) entweder aus einem Arbeitsspeicher (SPA) oder direkt über eine Datenschnittstelle (S) in einen Eingangszwischenspeicher (SPI) der Datenverarbeitungsanlage (D) eingelesen werden, daß Datenverarbeitungsprozeduren (INT, COM) von den im Eingangszwischenspeicher (SPI) eingelesenen und mit Steuerzeichen versehenen Text- und/oder Graphikdaten (DR) eine Speicherabbildung erzeugen und diese in einem Bildelementespeicher (BS) der Datenverarbeitungsanlage (D) speichern, und daß ein Codeanpassungs-Prozeduren ausführendes Programmodul (COD) Daten des im Bildelementespeicher (BS) gespeicherten Speicherabbildes des Dokumentes ausliest und faxspezifisch codiert.

2. Verfahren nach Anspruch 1,
**dadurch gekennzeichnet**,
daß die Datenverarbeitungsprozeduren im wesentlichen durch Prozeduren eines Interpreters (INT) und eines Composers (COM) bestimmt werden.

3. Verfahren nach Anspruch 1,
**dadurch gekennzeichnet**,
daß ein Codeanpassungs-Prozeduren ausführendes Programmodul Daten des im Bildelementespeicher (BS) gespeicherten Speicherabbildes eines Orginaldokumentes in eine faxspezifische horizontale und vertikale Auflösung transformiert, mit einem zur Fax-Datenübertragung geeigneten Code, insbesondere einen modifizierten "Huffman-Code" oder "Read-Code", codiert und Steuerinformationen zur Fax-Datenübertragung beifügt.
